# EUROPÄISCHE PATENTSCHRIFT

(11) **EP 2 740 455 B1**
(45) Veröffentlichungstag und Bekanntmachung des Hinweises auf die Patenterteilung: **09.09.2015**
(21) Anmeldenummer: 13189473.5
(22) Anmeldetag: 21.10.2013
(51) Int. Cl.: A61G 5/10, A61G 5/04, H02H 9/04, B62M 6/45, B60L 7/10, B60L 7/22, H02J 7/14

(54) **Kleinfahrzeug, insbesondere Rollstuhl**
Small vehicle, in particular wheelchair
Petit véhicule, notamment chaise roulante

(30) Priorität: 07.12.2012 DE 102012111940
(43) Veröffentlichungstag der Anmeldung: 11.06.2014
(73) Patentinhaber: AAT Alber Antriebstechnik GmbH, 72458 Albstadt (DE)
(72) Erfinder:
(74) Vertreter: Kohler Schmid Möbus Patentanwälte

(56) Entgegenhaltungen:
- DE-T2- 69 833 753
- JP-A- H09 131 083

## Beschreibung

Die Erfindung betrifft ein Kleinfahrzeug, insbesondere einen Rollstuhl, mit mindestens zwei Laufrädern, wobei an mindestens einem der Laufräder eine tangential auslenkbare Vorrichtung zur manuellen Krafteinleitung, insbesondere ein Greifring, angeordnet ist, mit einer Sensoreinrichtung zur Erfassung der manuell eingeleiteten Antriebskraft, mit mindestens einem Antriebsmotor für die Laufräder sowie einer Steuereinrichtung zur Ansteuerung des mindestens einen Antriebsmotors in Abhängigkeit von der erfassten manuellen Antriebskraft.

Solche Fahrzeuge sind unter anderem aus DE 698 33 753 T2 als kraftunterstützende Antriebe bereits bekannt.

Sie weisen an den Laufrädern Greifringe auf, mit denen der Rollstuhlfahrer die Laufräder manuell in beiden Richtungen antreiben kann. Zur Unterstützung der Muskelkraft des Rollstuhlfahrers insbesondere bei Bergauffahrten oder langen Fahrten kann ein Antriebsmotor für die Laufräder zugeschaltet werden, wobei dessen Drehmoment in Abhängigkeit von der in die Greifringe eingeleiteten Muskelkraft gesteuert wird. Damit wird sichergestellt, dass es einerseits zu keiner Überlastung der Muskulatur des Rollstuhlfahrers kommt, andererseits aber der therapeutische Wert eines Selbstfahrer-Rollstuhls erhalten bleibt.

Wenn der Rollstuhlfahrer die manuelle Krafteinleitung in die Greifringe stoppt oder die durch die Krafteinleitung bestimmte Solldrehzahl erreicht ist, wird der Antriebsmotor abgebremst. Er läuft somit noch eine gewisse Zeit nach, wobei die Nachlaufzeit bei den bekannten Rollstühlen linear von der erreichten Drehzahl des Motors abhängt. Die Nachlaufzeit hängt außerdem vom gewählten Unterstützungsgrad durch den Motor ab. Je höher dieser ist, desto länger ist die Nachlaufzeit, was für den Rollstuhlfahrer vor allem bei längeren Fahrten sehr angenehm ist.

In anderen Fahrsituationen, beispielsweise an Straßenkreuzungen zum Überfahren kleiner Bordsteine oder zum Anfahren eines Ampelschalters, sind kurze Nachlaufzeiten günstiger, um eine präzise Steuerung des Fahrzeugs zu erlauben. Bei den bekannten Fahrzeugen ist dies oft nur möglich, indem auf einen kleineren Unterstützungsgrad zurückgeschaltet wird.

Bei schneller Fahrt im Rollstuhl ist es schwer, das Tempo zu halten, denn es ist nach dem Stand der Technik notwendig, den Greifring weit oder sogar voll auszulenken. Das Problem besteht darin, dass sich das Antriebsrad und damit der Greifring bereits schnell dreht. Der Anwender muss also viel schneller sein als bei einer langsamen Fahrt, um die Sensorik auslenken zu können. Dies ist sehr anstrengend.

Der vorliegenden Erfindung liegt demgegenüber die Aufgabe zugrunde, mit möglichst einfachen und kostengünstigen technischen Mitteln ein Kleinfahrzeug der eingangs beschriebenen Art bereitzustellen, das auch bei schneller Fahrt einen hohen Bedienungskomfort für den Fahrer aufweist.

Diese Aufgabe wird auf überraschend einfache, aber wirkungsvolle Weise gelöst durch ein Kleinfahrzeug, insbesondere einen Rollstuhl, mit den eingangs definierten Merkmalen, bei dem das Antriebsverhalten des mindestens einen Antriebsmotors nach Erreichen einer Grenzdrehzahl, die einer vorgegebenen Grenzgeschwindigkeit des Kleinfahrzeugs entspricht, von der Steuereinrichtung derart beeinflussbar ist, dass auch mit einer gegenüber niedrigeren Drehzahlbereichen geringeren tangentialen Auslenkung der Vorrichtung zur manuellen Krafteinleitung die erreichte Geschwindigkeit oder der Geschwindigkeitsbereich gehalten wird.

Hat also der Anwender bereits eine bestimmte höhere Geschwindigkeit erreicht, wird das Sensorsignal so verwendet, dass auch mit einer geringeren Auslenkung diese Geschwindigkeit bzw. der höhere Geschwindigkeitsbereich gehalten wird.

Eine Ausführungsform des erfindungsgemäßen Kleinfahrzeugs zeichnet sich dadurch aus, dass bei Erreichen der Grenzdrehzahl mindestens ein zuvor registriertes Sensorsignal an die Steuereinrichtung abgegeben wird, um den Antriebsmotor entsprechend anzusteuern.

Eine Klasse von besonders bevorzugten Ausführungsformen der Erfindung zeichnet sich dadurch aus, dass das Antriebsverhalten des mindestens einen Antriebsmotors nach Beendigung der Einleitung der manuellen Antriebskraft oder nach Erreichen einer Solldrehzahl von der Steuereinrichtung derart beeinflussbar ist, dass die Drehzahl des Antriebsmotors in Abhängigkeit von der Größe der Drehzahl bei Beendigung der manuellen Krafteinleitung oder von der Solldrehzahl über die Zeit auf null abnimmt, wobei die Abnahme pro Zeiteinheit bei kleineren erreichten Drehzahlen größer ist als bei großen Drehzahlen.

Bei diesen Ausführungsformen des erfindungsgemäßen Fahrzeugs nimmt also die Drehzahl des Antriebsmotors nicht einfach linear mit einem konstanten Faktor in Abhängigkeit von der erreichten Drehzahl des Motors am Ende der manuellen Krafteinleitung ab. Die Abnahme pro Zeiteinheit ist vielmehr variabel. Je geringer die Drehzahl des Motors war, desto größer ist die Abnahme je Zeiteinheit und damit desto geringer die Nachlaufzeit des Motors. Dies ermöglicht ein sehr präzises Steuern des Fahrzeugs bei kleinen Geschwindigkeiten. Bei höheren Geschwindigkeiten ist dagegen die Nachlaufzeit des Motors entsprechend länger, sodass ein ermüdungsfreies Fahren auch über längere Strecken möglich ist.

Die Abnahme kann beispielsweise linear, stufenweise oder nach einer anderen Funktion mit Änderung der erreichten Drehzahl verändert werden. Die Abnahme je Zeiteinheit könnte auch quadratisch mit sinkender Drehzahl zunehmen. Auch eine manuelle Beeinflussung der Drehzahlabnahme kann vorgesehen werden. In jedem Fall wird damit das Nachlaufverhalten gegenüber den bekannten Fahrzeugen erheblich verbessert.

Bei Weiterbildungen dieser Klasse von Ausführungsformen kann bei dem Kleinfahrzeug in an sich bekannter Weise der Unterstützungsgrad des mindestens einen Antriebsmotors stufenweise vorwählbar sein. Innerhalb jeder Stufe des Unterstützungsgrades verändert sich dann die Drehzahlabnahme des Motors pro Zeiteinheit drehzahlabhängig gemäß der Erfindung.

Dabei ist es von besonderem Vorteil, wenn für jeden Unterstützungsgrad die Abnahme der Drehzahl des Motors pro Zeiteinheit in Abhängigkeit von der erreichten Drehzahl in Stufen veränderbar ist. Der Fahrer kann somit selbst wählen, ob er bei einem bestimmten Unterstützungsgrad eine eher längere oder eine eher kürzere Nachlaufzeit wünscht.

Rollstühle mit Zusatzantrieben weisen in der Regel im Radnabenbereich angeordnete Motoren auf, die von einem Akku gespeist werden. Während der Motor den Rollstuhl antreibt, zieht er Strom aus dem Akku. Wird der Rollstuhl dagegen manuell angetrieben oder bei Bergabfahrten durch die Schwerkraft beschleunigt, so wirkt der Motor als Generator und kann den Akku wieder aufladen. Da die Motorsteuerung und die Steuerung des Ladevorgangs des Akkus über elektronische Schaltungen erfolgen, kann es bei zu hohen induzierten Spannungen zu Zerstörungen empfindlicher elektronischer Bauteile und Komponenten kommen.

Um dies zu verhindern, sind bei einer weiteren Klasse von besonders bevorzugten Ausführungsformen des erfindungsgemäßen Kleinfahrzeugs eine Schutzschaltung für den Antriebsmotor sowie mindestens ein elektrischer Energiespeicher vorgesehen, der bei manueller Bewegung oder aufgrund einer Bergabfahrt selbsttätigen Bewegung des Rollstuhls über die Schutzschaltung durch eine vom Motor induzierte Spannung wieder aufladbar ist, wobei die Schutzschaltung bei Überschreiten eines vorgebbaren kritischen Schwellwerts für die induzierte Spannung die vom Motor induzierte Spannung durch Schließen eines Schalters kurzschließt.

Die Schutzschaltung ist vorzugsweise zwischen dem Motor und dem Akku angeordnet. Durch rechtzeitiges Kurzschließen der vom Motor induzierten Spannung können Zerstörungen elektronischer Komponenten in den Steuereinrichtungen und natürlich auch eine Zerstörung von Akkumulatorzellen vermieden werden. Durch den Kurzschluss der Motorspannung kann bzw. können außerdem das vom Motor angetriebene Rad oder die angetriebenen Räder abgebremst werden, was der Sicherheit des Fahrers des Rollstuhls oder Kleinfahrzeugs dient.

Die Schutzschaltung selbst kann ebenfalls mit der vom Motor induzierten Spannung betrieben werden. Da diese Spannung nach dem Schließen des Schalters nicht mehr zur Verfügung steht, ist es vorteilhaft, wenn die Schutzschaltung mindestens einen Pufferkondensator aufweist, der die Schutzschaltung nach dem Kurzschließen der vom Motor induzierten Spannung für eine bestimmte Zeitdauer durch Aufrechterhalten einer Pufferspannung weiter mit Strom versorgt.

Da die Pufferspannung dabei stetig abnimmt, ist es weiter von Vorteil, wenn bei Unterschreiten eines Schalt-Schwellwerts der Pufferspannung die Schutzschaltung den Kurzschluss durch Öffnen des Schalters wieder aufhebt, sodass die Schutzschaltung wieder mit der vom Motor induzierten Spannung betrieben wird und die Pufferkondensatoren wieder aufgeladen werden können.

Nach Öffnen des Schalters nimmt die Schutzschaltung die Überwachung der induzierten Spannung wieder auf. Dabei kann sie vorzugsweise nach Öffnen des Schalters prüfen, ob die induzierte Spannung einen unterhalb des kritischen Schwellwerts liegenden Ausschalt-Schwellwert unterschritten hat, und den Schalter erneut schließen, wenn die induzierte Spannung höher als der Ausschalt-Schweilwert ist. Das Vorsehen eines zweiten, niedrigeren Schwellwerts für das Schalten der induzierten Spannung, nachdem diese Spannung kurzgeschlossen wurde, bewirkt, dass die induzierte Spannung erst ausreichend reduziert und damit das Fahrzeug abgebremst wird, bevor erneut die reguläre Überwachung auf Überschreiten des kritischen Schwellwerts durch die induzierte Spannung erfolgt.

Wenn die Schutzschaltung durch die induzierte Spannung betrieben wird, ist es außerdem sinnvoll, dass die Schutzschaltung erst dann in einen aktiven Modus schaltet, wenn die induzierte Spannung einen unteren Grenzwert erreicht, da eine Überwachung der induzierten Spannung nur auf Überschreiten hoher Schwellwerte erfolgt.

Der Schalter kann vorzugsweise ein MOSFET sein. Aber auch andere Transistoren oder Relais lassen sich als Schalter einsetzen.

Bei Rollstühlen ist in der Regel für jedes Laufrad ein gesonderter Antriebsmotor vorgesehen. Jedem dieser Motoren muss daher eine Schutzschaltung zugeordnet werden. Es ist daher zweckmäßig, wenn die Schutzschaltung mit einer Steuerelektronik verbindbar ist, welche die Schaltzustände mehrerer Schutzschaltungen überwacht. Dadurch kann die Schutzschaltung durch die Steuerelektronik aktiviert werden, wenn mindestens eine der anderen an die Steuerelektronik angeschlossenen Schutzschaltungen ebenfalls im aktiven Modus ist. Andernfalls müsste eine Schutzschaltung den Strom eines anderen Motors mit übernehmen. Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: eine perspektivische Darstellung eines erfindungsgemäßen Fahrzeugs in Form eines Rollstuhls;
- Fig. 2: eine perspektivische Darstellung einer weiteren Ausführungsform des erfindungsgemäßen Fahrzeugs;
- Fig. 3: den Drehzahlverkauf des Antriebsmotors eines Fahrzeugs nach dem Stand der Technik über der Zeit;
- Fig. 4: den Drehzahlverlauf eines erfindungsgemäß modifizierten Fahrzeugs; und
- Fig. 5: ein schematisches Blockschaltbild einer Schutzschaltung für ein erfindungsgemäßes Fahrzeug.

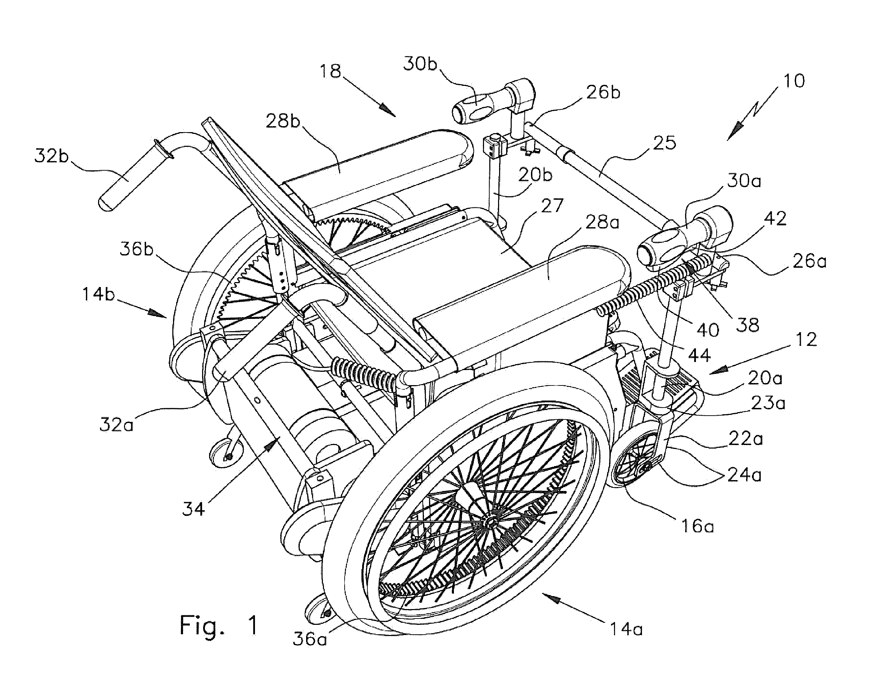

Ein Rollstuhl 10 mit einer Handlenkung 12 ist in Fig. 1 dargestellt. Der Rollstuhl 10 weist zwei Hinterräder 14a, 14b und zwei Vorderräder auf, von denen aus Gründen der perspektivischen Darstellung lediglich ein erstes Vorderrad 16a dargestellt ist. Der Rollstuhl 10 weist weiterhin einen Sitz 18 zum Transport eines Fahrers (nicht gezeigt) auf.

Die Handlenkung 12 weist zwei Hochachsen 20a, 20b auf, die mit Halterungen zur Führung der Vorderräder verbunden sind. In der Darstellung ist dies anhand einer ersten Hochachse 20a, die mit einer ersten in Form einer Gabel ausgebildeten Halterung 22a zur Führung des ersten Vorderrades 16a verbunden ist, gezeigt. Die erste Hochachse 20a ist in einem ersten Lager 23a im Wesentlichen vertikal geführt. Die erste Halterung 22a ist in direkter Verlängerung der ersten Hochachse 20a angeordnet. Das erste Vorderrad 16a kann in der ersten Halterung 22a ebenfalls im Wesentlichen in direkter Verlängerung der ersten Hochachse 20a angeordnet werden, wodurch eine sehr leichte Lenkbarkeit des ersten Vorderrades erzielt wird. Die erste Halterung 22a weist beidseitig eine Langnut 24a auf, in der die Position der Achse des ersten Vorderrades 16a verstellbar ist. Wird die Position des ersten Vorderrades 16a von der Verlängerung der ersten Hochachse 20a weg verschoben, wird das erste Vorderrad 16a während der Fahrt weniger leicht verkantet und weist eine höhere Spurtreue auf. Das Schieben des Rollstuhls 10 wird dadurch erleichtert. Durch die Verstellbarkeit der Achsposition des ersten Vorderrades 16a mittels der Langnuten 24a kann auf praktische Art und Weise ein Optimum zwischen leichter Lenkbarkeit und Spurtreue gefunden werden.

Eine Lenkstange 25 ist exzentrisch mit den Hochachsen 20a, 20b verbunden. Hierdurch können die Hochachsen 20a, 20b simultan gedreht werden. Um dem Fahrer das Ein- und Aussteigen in bzw. aus dem Rollstuhl zu erleichtern, ist die Lenkstange 25 beidseitig mittels einer Schraubverbindung 26a, 26b lösbar an der Handlenkung 12 angeordnet. Die Lenkstange 25 kann mittels der Schraubverbindungen 26a, 26b vollständig entfernt werden. Alternativ dazu kann die Lenkstange 25 einseitig an einer der Schraubverbindungen 26a, 26b gelöst und vom Rollstuhl 10 weg geschwenkt werden. Anstelle der Schraubverbindungen 26a, 26b können Schnellverschlüsse zum leichten Verschwenken und/oder Entfernen der Lenkstange 25 vorgesehen sein.

Die Lenkstange 25 dient neben der Verbindung der beiden Hochachsen 20a, 20b zum Rückhalten des Fahrers, sodass dieser nicht aus dem Sitz 18 herausfallen kann. Um die Bewegungsfreiheit des Fahrers nicht einzuschränken, ist die Lenkstange 25 von den Hochachsen 20a, 20b beabstandet angeordnet. Die Lenkstange 25 weist hierdurch einen gewissen Abstand zum Sitz 18 des Rollstuhls 10 auf.

Um dem Fahrer den Zugang zu der Lenkstange 25 zu erleichtern, ist diese ungefähr in Höhe der Ellbogen des sitzenden Fahrers angeordnet. Die Lenkstange 25 befindet sich dabei ungefähr in Höhe der Armstützen 28a, 28b des Rollstuhls 10 bzw. ca. 20 cm oberhalb einer Sitzfläche 27 des Rollstuhls 10. Die Handlenkung 12 weist weiterhin Handgriffe 30a, 30b auf. Die Handgriffe 30a, 30b sind dabei horizontal ausgerichtet und weisen in Fahrtrichtung. Hierdurch wird sowohl eine intuitive Lenkung des Rollstuhls 10 als auch ein bequemes Abstützen des Fahrers an den beiden Handgriffen 30a, 30b ermöglicht.

Der Rollstuhl 10 kann an den Führungsgriffen 32a, 32b geschoben werden. Während des Schiebens durch eine Begleitperson kann der Fahrer durch die Handlenkung 12 aktiv die Fahrtrichtung steuern. Alternativ dazu kann der Rollstuhl 10 durch einen Antriebsmotor 34 bewegt werden. Der Antriebsmotor 34 weist einen Elektromotor, einen Akkumulator und ein Differentialgetriebe (jeweils nicht einzeln bezeichnet) auf. Der Antriebsmotor 34 treibt beide Hinterräder 14a, 14b an. Hierzu weist der Antriebsmotor 34 zwei Zahnräder (nicht gezeigt) auf, die in jeweils einen Zahnkranz 36a, 36b der Hinterräder 14a, 14b eingreifen. Aufgrund der Handlenkung 12 kann der Rollstuhl 10 mit einem einzigen Antriebsmotor 34 gefahren werden. Die Steuerung des Antriebsmotors 34 erfolgt dabei über ein Bedienelement 38 in Form einer stufenlos betätigbaren Schaltwippe am ersten Handgriff 30a. Bei einer Betätigung des hinteren Endes 40 der Schaltwippe wird dabei die Vorwärtsbewegung des Rollstuhls 10 gesteuert, während bei einer Betätigung des vorderen Endes 42 der Schaltwippe die Rückwärtsbewegung des Rollstuhls 10 gesteuert wird. Das Signal der Schaltwippe wird dabei über ein Spiralkabel 44 zum Antriebsmotor 34 übertragen. Das Spiralkabel 44 ermöglicht einen Längenausgleich bei der Lenkbewegung, sodass diese nicht durch das Spiralkabel 44 beeinträchtigt wird. Das Spiralkabel 44 ist unter der ersten Armstütze 28 geführt, um die Bewegungsfreiheit des Fahrers nicht zu stören.

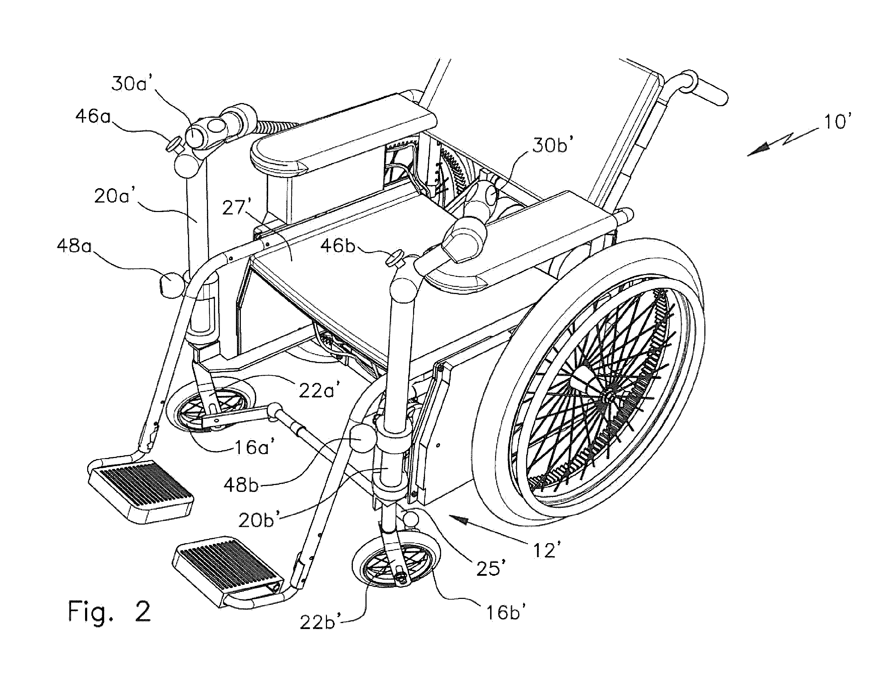

Ein weiterer Rollstuhl 10' ist in perspektivischer Darstellung in Fig. 2 gezeigt. Im Gegensatz zu dem in Fig. 1 dargestellten Rollstuhl 10 weist eine Handlenkung 12' des Rollstuhls 10' eine Lenkstange 25' auf, die unterhalb einer Sitzfläche 27', in Höhe der Vorderräder 16a', 16b', angeordnet ist. Die Lenkstange 25' behindert den Fahrer durch ihre Position nicht beim Ein- bzw. Aussteigen aus dem Rollstuhl 10'. Die Vorderräder 16a', 16b' sind in Halterungen 22a', 22b' geführt, die in Form von Gabeln ausgebildet sind. Die Halterungen 22a', 22b' führen die Vorderräder 16a', 16b' versetzt zur Verlängerung der Hochachsen 20a', 20b'. Hierdurch wird eine hohe Spurtreue gewährleistet. Die Hochachsen 20a', 20b' werden von einem Fahrer (nicht gezeigt) durch Handgriffe 30a', 30b' betätigt. Die Winkel der Handgriffe 30a', 30b' zur Horizontalen sowie die Höhe der Handgriffe 30a', 30b' relativ zu den Hochachsen 20a', 20b' sind durch Handgriff-Verstelleinrichtungen 46a, 46b einstellbar.

Die Lenkbewegung der Handlenkung 12' wird durch Anschläge 48a, 48b begrenzt. Durch die Anschläge 48a, 48b wird ein Überdrehen sowie ein Verkanten der Hochachsen 20a', 20b' verhindert.

Nachfolgend wird ein Ausführungsbeispiel des Nachlaufverhaltens eines erfindungsgemäß modifizierten Fahrzeugs im Vergleich zum Stand der Technik anhand von Diagrammen verdeutlicht:

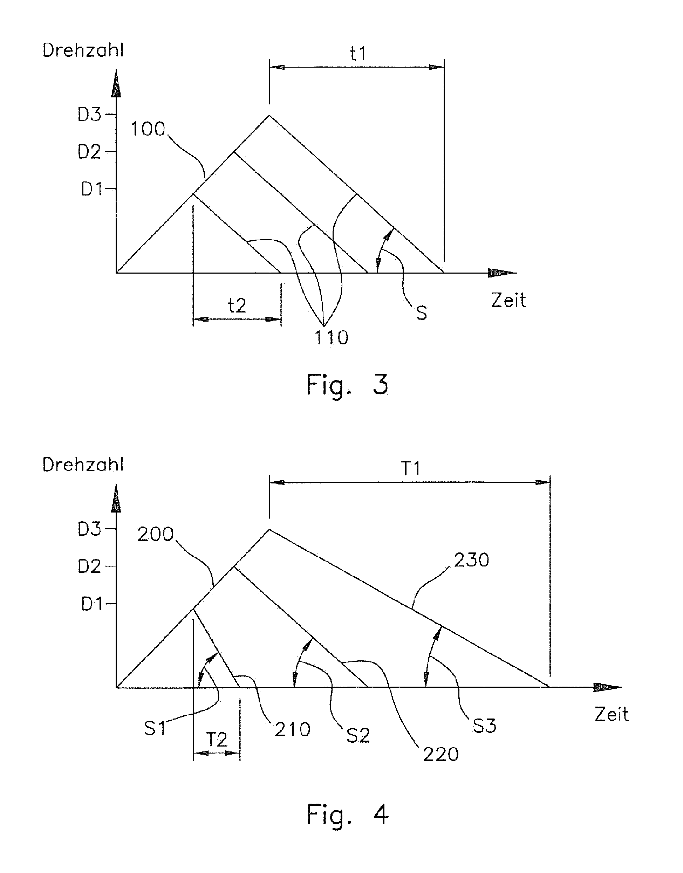

Fig. 3 zeigt den Drehzahlverlauf des Antriebsmotors eines Fahrzeugs nach dem Stand der Technik über der Zeit. Mit Einteilung einer manuellen Antriebskraft auf das oder die Laufräder wird der Antriebsmotor linear beschleunigt, bis die manuelle Krafteinwirkung stoppt. Der Drehzahlverlauf zeigt eine lineare Anstiegsrampe 100. Nach Beendigung der manuellen Krafteinleitung fällt die Drehzahl linear über der Zeit ab. Gezeigt sind drei verschiedene Kurven, die alle ein gleiches Beschleunigungs- und Abbremsverhalten des Motors zeigen, unabhängig davon, welche Drehzahl D1, D2 oder D3 am Ende der Beschleunigungsphase erreicht wurde. Die drei Nachlauframpen 110 haben die gleiche Steigerung s. Dadurch ergibt sich bei hoher erreichter Drehzahl eine lange Nachlaufzeit t1 und bei geringer erreichter Drehzahl eine kurze Nachlaufzeit t2.

Wie das Diagramm in Fig. 4 verdeutlicht, ist bei einem erfindungsgemäßen Fahrzeug das Beschleunigungsverhalten ebenfalls konstant, d. h. es ergibt sich eine Beschleunigungsrampe 200 konstanter Steigung. Die Nachlauframpen 210, 220 und 230 haben nun jedoch alle eine unterschiedliche Steigung S1, S2 und S3, die von der erreichten Drehzahl D1, D2 oder D3 des Motors am Ende der Beschleunigungsphase abhängt. Bei der Kurve mit der höchsten erreichten Drehzahl D3 ergibt sich die flachste Nachlauframpe und damit eine sehr lange Nachlaufzeit T1, was insbesondere bei längeren Fahrten vom Fahrer als sehr angenehm empfunden wird. Bei der geringen erreichten Drehzahl D1 dagegen verläuft die Nachlauframpe sehr steil, was zu einer sehr kurzen Nachlaufzeit T2 führt. Dies begünstigt ein präzises Lenken des Fahrzeugs bei geringen Geschwindigkeiten.

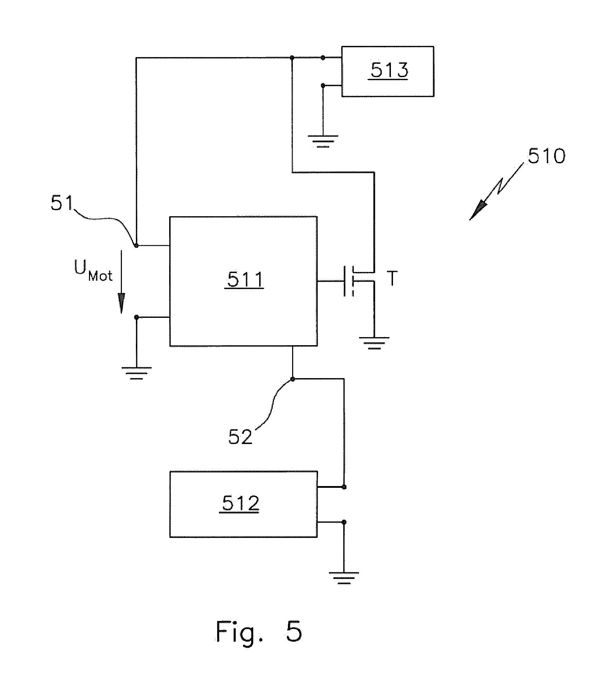

Fig. 5 schließlich zeigt ein schematisches Blockschaltbild einer erfindungsgemäßen Schutzschaltung 510. Sie weist eine intelligente Schaltung 511 mit zwei Eingängen 51 und 52 auf. Am Eingang 51 liegt die induzierte Spannung U_{Mot} eines Antriebsmotors 513 an. Der zweite Eingang 52 ist mit einer Steuerelektronik 512 verbunden, die mehrere Schutzschaltungen 510 überwacht. Am Ausgang der intelligenten Schaltung 511 ist ein MOSFET-Transistor T als Schalter angeordnet.

Wird der Schalter T geschlossen, so wird die induzierte Spannung U_{Mot} des Antriebsmotors 513 kurzgeschlossen. Das Schließen des Schalters T wird von der intelligenten Schaltung 511 ausgelöst, sobald die Spannung U_{Mot} an ihrem Eingang 51 einen kritischen Schwellwert überschreitet. Damit die intelligente Schaltung 511 auch nach Schließen des Schalters T ihre Überwachungsfunktion weiter erfüllen kann, sind in der Schaltung 511 ein oder mehrere hier nicht näher dargestellte Pufferkondensatoren vorhanden, die die Stromversorgung der Schaltung 511 übernehmen, solange die Spannung U_{Mot} kurzgeschlossen ist. Sie sorgen dafür, dass die Schaltung 511 den Schalter T wieder öffnen und den Wert der Spannung U_{Mot} erneut bestimmen kann. Ergibt diese Bestimmung, dass die Spannung U_{Mot} nach dem Schließen des Schalters T einen unteren Schwellwert unterschritten hat, bleibt der Schalter T weiter geöffnet. Andernfalls wird der Schalter T erneut geschlossen.

Darüber hinaus kann das Schließen und Öffnen des Schalters T auch durch die Steuerelektronik 512 kontrolliert werden. Sobald eine der Schutzschaltungen 510 bei Überschreiten einer Grenzspannung durch U_{Mot} im aktiven Modus ist, müssen auch alle anderen Schutzschaltungen 510 aktiviert werden, damit nicht mehrere Antriebsmotoren durch eine Schutzschaltung 510 überwacht werden. Schaltet einer der Schalter T, werden auch die Schalter T der anderen Schutzschaltungen 510 geschlossen. Weiter verhindert die Steuerschaltung 512 ein Kurzschließen des Akkumulators.

## Patentansprüche

1. Kleinfahrzeug (10; 10'), insbesondere Rollstuhl, mit zwei Laufrädern (14a, 14b), wobei an mindestens einem der Laufräder (14a, 14b) eine tangential auslenkbare Vorrichtung zur manuellen Krafteinleitung, insbesondere ein Greifring, angeordnet ist, mit einer Sensoreinrichtung zur Erfassung der manuell eingeleiteten Antriebskraft, mit mindestens einem Antriebsmotor (34; 513) für die Laufräder (14a, 14b) und einer Steuereinrichtung zur Ansteuerung des mindestens einen Antriebsmotors (34; 513) in Abhängigkeit von der erfassten manuellen Antriebskraft,
**dadurch gekennzeichnet,**
**dass** das Antriebsverhalten des mindestens einen Antriebsmotors (34; 513) nach Erreichen einer Grenzdrehzahl, die einer vorgegebenen Grenzgeschwindigkeit des Kleinfahrzeugs (10; 10') entspricht, von der Steuereinrichtung derart beeinflussbar ist, dass auch mit einer geringeren tangentialen Auslenkung der Vorrichtung zur manuellen Krafteinleitung die erreichte Grenzgeschwindigkeit oder ein Geschwindigkeitsbereich gehalten wird, indem bei Erreichen der Grenzdrehzahl mindestens ein zuvor registriertes Sensorsignal an die Steuereinrichtung abgegeben oder ein zuvor fest einprogrammierter oder über einen fest vorgegebenen Umrechnungsfaktor errechneter Signalwert an die Steuereinrichtung weitergeleitet wird, um den Antriebsmotor (34; 513) entsprechend so anzusteuern, dass auch mit einer geringeren Auslenkung der Vorrichtung zur manuellen Krafteinleitung die bereits erreichte höhere Grenzgeschwindigkeit bzw. der höhere Geschwindigkeitsbereich gehalten wird.

2. Kleinfahrzeug nach Anspruch 1, **dadurch gekennzeichnet, dass** das Antriebsverhalten des mindestens einen Antriebsmotors (34; 513) nach Beendigung der Einleitung der manuellen Antriebskraft oder nach Erreichen einer Solldrehzahl von der Steuereinrichtung derart beeinflussbar ist, dass die Drehzahl des Antriebsmotors (34; 513) in Abhängigkeit von der Größe der Drehzahl bei Beendigung der manuellen Krafteinleitung oder von der Solldrehzahl über die Zeit auf null abnimmt, wobei die Drehzahl-Abnahme pro Zeiteinheit bei kleineren erreichten Drehzahlen größer ist als bei großen Drehzahlen.

3. Kleinfahrzeug nach Anspruch 2, **dadurch gekennzeichnet, dass** sich die Abnahme pro Zeiteinheit linear, stufenweise oder nach einer vorgebbaren Funktion mit Änderung der erreichten Drehzahl verändert.

4. Kleinfahrzeug nach einem der Ansprüche 2 oder 3, **dadurch gekennzeichnet, dass** der Unterstützungsgrad des mindestens einen Antriebsmotors (34; 513) stufenweise vorwählbar ist.

5. Kleinfahrzeug nach Anspruch 4, **dadurch gekennzeichnet, dass** für jeden Unterstützungsgrad die Abnahme der Drehzahl des Antriebsmotors (34; 513) pro Zeiteinheit in Abhängigkeit von der erreichten Drehzahl in Stufen veränderbar ist.

6. Kleinfahrzeug nach einem der vorhergehenden Ansprüche, **dadurch gekennzeichnet, dass** eine Schutzschaltung (510) für den Antriebsmotor (34; 513) vorgesehen ist sowie mindestens ein elektrischer Energiespeicher, der bei manueller Bewegung oder aufgrund einer Bergabfahrt selbsttätigen Bewegung des Rollstuhl über die Schutzschaltung (510) durch eine vom Antriebsmotor (34; 513) induzierte Spannung wieder aufladbar ist, und dass die Schutzschaltung (510) bei Überschreiten eines vorgebbaren kritischen Schwellwerts für die induzierte Spannung die vom Antriebsmotor (34; 513) induzierte Spannung durch Schließen eines Schalters kurzschließt.

7. Kleinfahrzeug nach Anspruch 6, **dadurch gekennzeichnet, dass** die Schutzschaltung (510) mindestens einen Pufferkondensator aufweist, der die Schutzschaltung (510) nach dem Kurzschließen der vom Antriebsmotor (34; 513) induzierten Spannung für eine bestimmte Zeitdauer durch Aufrechterhalten einer Pufferspannung weiter mit Strom versorgt.

8. Kleinfahrzeug nach Anspruch 7, **dadurch gekennzeichnet, dass** die Schutzschaltung (510) nach Öffnen des Schalters prüft, ob die induzierte Spannung einen unterhalb des kritischen Schwellwerts liegenden Ausschalt-Schwellwert unterschritten hat, und den Schalter erneut schließt, wenn die induzierte Spannung höher als der Ausschalt-Schwellwert ist, und dass bei Unterschreiten eines Schalt-Schwellwerts der Pufferspannung die Schutzschaltung (510) den Kurzschluss durch Öffnen des Schalters wieder aufhebt.

9. Kleinfahrzeug nach einem der Ansprüche 6 bis 8, **dadurch gekennzeichnet, dass** die Schutzschaltung (510) in einen aktiven Modus schaltet, wenn die induzierte Spannung einen unteren Grenzwert erreicht.

## Claims

1. Small conveyance (10; 10'), in particular a wheelchair, with two rear wheels (14a, 14b), a tangentially displaceable device for imparting manual force, in particular a handrim, being arranged on at least one of the rear wheels (14a, 14b), with a sensor device for detecting manually imparted driving force, with at least one drive motor (34; 513) for the rear wheels (14a, 14b) and a control device for controlling the at least one drive motor (34; 513) as a function of the manual driving force which has been detected,
**characterized in that**
the drive behaviour of the at least one drive motor (34; 513) upon attaining an rpm limit corresponding to a preordained limiting speed of the conveyance (10; 10') can be modified by the control device so that even with a smaller tangential displacement of the device for imparting manual force the limiting speed which has been attained, or a range of speed, is maintained by outputting at least one prerecorded sensor signal to the control device when the rpm limit is attained or forwarding a fixed preprogrammed signal value, or signal value computed with a fixed preordained conversion factor, to the control device, to activate the drive motor (34; 513) accordingly so that even with a smaller displacement of the device for imparting manual force, the higher limiting speed which has already been attained, and/or the higher speed range, is maintained.

2. Conveyance according to Claim 1, **characterized in that** the drive behaviour of the at least one drive motor (34; 513) upon cessation of the imparting of manual driving force or upon attaining a set rpm can be modified by the control device so that the rpm of the drive motor (34; 513) is reduced to zero over time as a function of the magnitude of the rpm upon cessation of the imparting of manual force or [as a function] of the set rpm, the reduction in rpm per unit of time being greater at lower attained rpm values than at high rpm values.

3. Conveyance according to Claim 2, **characterized in that** the reduction per unit of time varies linearly or in steps or in accordance with a presettable function with the change in attained rpm.

4. Conveyance according to either of Claims 2 and 3, **characterized in that** the degree of support of the at least one drive motor (34; 513) is preselectable in steps.

5. Conveyance according to Claim 4, **characterized in that** for each degree of support, the reduction in the rpm of the drive motor (34; 513) per unit of time is variable in steps as a function of the attained rpm.

6. Conveyance according to any one of the preceding claims, **characterized in that** a protective circuit (510) is provided for the drive motor (34; 513), and also at least one electrical power storage device which can be recharged through the protective circuit (510) by a voltage induced by the drive motor (34; 513) when the wheelchair is being propelled manually or is rolling freely downhill, and **in that** the protective circuit (510) short-circuits the voltage induced by the drive motor (34; 513) by closing a switch when a presettable critical threshold value for the induced voltage is exceeded.

7. Conveyance according to Claim 6, **characterized in that** the protective circuit (510) has at least one buffer capacitor which keeps the protective circuit (510) supplied with power by maintaining a buffer voltage for a specified period following a short-circuit of the voltage induced by the drive motor (34; 513).

8. Conveyance according to Claim 7, **characterized in that** after opening the switch, the protective circuit (510) checks whether the induced voltage has fallen below a switchoff threshold value which is lower than the critical threshold value, and closes the switch again if the induced voltage is above the switchoff threshold value, and **in that** the protective circuit (510) cancels the short-circuit by opening the switch again when the buffer voltage falls below a switch threshold value.

9. Conveyance according to any one of Claims 6 to 8, **characterized in that** the protective circuit (510) switches to an active mode if the induced voltage reaches a lower limit value.

## Revendications

1. Petit véhicule (10 ; 10'), en particulier fauteuil roulant, avec deux roues (14a, 14b), un dispositif d'application manuelle de force, en particulier une main courante, pouvant braquer tangentiellement étant disposé sur au moins une des roues (14a, 14b), avec un dispositif de capteur pour la détection de la force d'entraînement appliquée manuellement, avec au moins un moteur d'entraînement (34 ; 513) pour les roues (14a, 14b) et un dispositif de commande pour le pilotage du au moins un moteur d'entraînement (34 ; 513) en fonction de la force d'entraînement manuelle détectée,
**caractérisé en ce que**,
une fois atteinte une vitesse de rotation limite qui correspond à une vitesse limite prédéfinie du petit véhicule (10; 10'), le comportement d'entraînement du au moins un moteur d'entraînement (34 ; 513) peut être influencé par le dispositif de commande de telle sorte que, même avec un braquage tangentiel plus faible du dispositif d'application manuelle de force, la vitesse limite atteinte ou une plage de vitesse est maintenue par le fait que, une fois atteinte la vitesse de rotation limite, au moins un signal de capteur enregistré au préalable est délivré au dispositif de commande ou une valeur de signal programmée de façon fixe au préalable ou calculée par le biais d'un facteur de conversion fixe est transmise au dispositif de commande afin de piloter le moteur d'entraînement (34 ; 513) de telle manière que, même avec un braquage tangentiel plus faible du dispositif d'application manuelle de force, la vitesse limite plus élevée déjà atteinte ou la plage de vitesse plus élevée est maintenue.

2. Petit véhicule selon la revendication 1, **caractérisé en ce que**, après la fin de l'application de la force d'entraînement manuelle ou une fois atteinte une vitesse de rotation de consigne, le comportement d'entraînement du au moins un moteur d'entraînement (34 ; 513) peut être influencé par le dispositif de commande de telle sorte que la vitesse de rotation du moteur d'entraînement (34 ; 513) diminue jusqu'à zéro en fonction de la grandeur de la vitesse de rotation à la fin de l'application manuelle de la force ou en fonction de la vitesse de rotation de consigne au cours du temps, la diminution de la vitesse de rotation par unité de temps étant plus forte en présence de vitesses de rotation atteintes plus faibles qu'en présence de vitesses de rotation élevées.

3. Petit véhicule selon la revendication 2, **caractérisé en ce que** la diminution par unité de temps varie, de façon linéaire, par étapes ou selon une fonction pouvant être prédéfinie, avec la variation de la vitesse de rotation atteinte.

4. Petit véhicule selon une des revendications 2 ou 3, **caractérisé en ce que** le degré d'assistance du au moins un moteur d'entraînement (34; 513) peut être présélectionné graduellement.

5. Petit véhicule selon la revendication 4, **caractérisé en ce que**, pour chaque degré d'assistance, la diminution de la vitesse de rotation du moteur d'entraînement (34 ; 513) par unité de temps est variable par degrés en fonction de la vitesse de rotation atteinte.

6. Petit véhicule selon une des revendications précédentes, **caractérisé en ce qu'**il est prévu un circuit de protection (510) pour le moteur d'entraînement (34 ; 513) ainsi qu'au moins un accumulateur d'énergie électrique qui, lors du déplacement manuel ou lors d'un déplacement automatique du fauteuil roulant du fait d'une pente descendante, peut être rechargé, par le biais du circuit de protection (510), par une tension induite par le moteur d'entraînement (34 ; 513), et **en ce que**, lors du dépassement d'une valeur de seuil critique pouvant être prédéfinie pour la tension induite, le circuit de protection (510) met en court-circuit, en fermant un commutateur, la tension induite par le moteur d'entraînement (34 ; 513).

7. Petit véhicule selon la revendication 6, **caractérisé en ce que** le circuit de protection (510) présente au moins un condensateur tampon qui, après la mise en court-circuit de la tension induite par le moteur d'entraînement (34 ; 513), continue à alimenter en courant le circuit de protection (510) pendant une durée définie par le maintien d'une tension tampon.

8. Petit véhicule selon la revendication 7, **caractérisé en ce que**, après l'ouverture du commutateur, le circuit de protection (510) examine si la tension induite est passée sous une valeur de seuil de déclenchement située au-dessous de la valeur de seuil critique et referme le commutateur quand la tension induite est plus élevée que la valeur de seuil de déclenchement, et **en ce que**, en cas de passage sous une valeur de seuil de déclenchement de la tension tampon, le circuit de protection (510) met de nouveau fin au court-circuit par l'ouverture du commutateur.

9. Petit véhicule selon une des revendications 6 à 8, **caractérisé en ce que** le circuit de protection (510) commute dans un mode actif quand la tension induite atteint une vitesse limite inférieure.
